# EUROPÄISCHE PATENTANMELDUNG

(11) **EP 3 351 840 A1**
(43) Veröffentlichungstag der Anmeldung: **25.07.2018**
(21) Anmeldenummer: 18152955.3
(22) Anmeldetag: 23.01.2018
(51) Int. Cl.: F16L 3/10, F16L 3/12, F16L 3/127, F16L 3/133, F16L 3/137, H01Q 1/12, H01Q 13/20, H02G 3/32, E21F 17/02

(54) **HALTEVORRICHTUNG FÜR EIN KABEL ODER ROHR**

(30) Priorität: 23.01.2017 AT 500382017; 23.01.2017 EP 17152635; 23.01.2017 EP 17152637
(71) Anmelder: EFCO Befestigungstechnik AG, 8606 Nänikon (CH)
(72) Erfinder: DOPPELBAUER, Thomas, 6800 Feldkirch (AT)
(74) Vertreter: Torggler & Hofinger Patentanwälte

(57) **Zusammenfassung**

Haltevorrichtung (1) für ein Kabel oder Rohr (28), mit:
- einem Haltefuß (2) zur Montage der Haltevorrichtung (1) an einem Untergrund
- einer am Haltefuß (2) angeordneten Befestigungsvorrichtung zur Befestigung des Kabels oder Rohr am Haltefuß (2), welche einen ersten Bügel (61) und einen zweiten Bügel (62) aufweist, die durch einen Bügelverschluss (7) miteinander verriegelbar sind, wobei ein freies Ende (8) des ersten oder zweiten Bügels (61, 62) in eine Öffnung (9) des Bügelverschlusses (7) einführbar ist
- einem Gelenk (23), welches den zweiten Bügel (62) mit dem Haltefuß (2) verbindet oder im zweiten Bügel (62) angeordnet ist, wobei
- der zweite Bügel (62) die Öffnung (9) des Bügelverschlusses (7) trägt und die Öffnung (9) des Bügelverschlusses (7) durch Druckausübung auf den zweiten Bügel (62) über das freie Ende (8) des ersten Bügels (61) bewegbar und durch den Bügelverschluss (7) verriegelbar ist,
wobei
- oberhalb der Öffnung (9) des Bügelverschlusses (7) eine Spannhilfe (15) angeordnet ist, um einen definierten Angriffspunkt zur Druckausübung auf den zweiten Bügel (62) zur Verfügung zu stellen.

## Beschreibung

Die Erfindung betrifft eine Haltevorrichtung mit den Merkmalen des Oberbegriffs des Anspruchs 1.

Haltevorrichtungen für Kabel oder Rohre können flexible Bänder aufweisen (vgl. z. B. NL 7214307 A und WO 2015/193841 A1) oder starre Bügel, von denen einer der Bügel über ein Gelenk am Haltefuß angeordnet ist (vgl. z. B. EP 2 141 397 A1).

Bei bekannten Haltevorrichtungen mit Bügeln ist die Öffnung des Bügelverschlusses am ersten Bügel angeordnet und ein freies Ende des über das Gelenk am Haltefuß angeordneten zweiten Bügels wird in die am ersten Bügel angeordnete Öffnung eingeführt. Dies gelingt nicht immer, weil es zu einem ungewollten Ausweichen des freien Endes des zweiten Bügels und damit zu einem Verfehlen der Öffnung des Bügelverschlusses kommen kann. Auch das Vorsehen einer am zweiten Bügel angeordneten Spannhilfe löst dieses Problem nicht, denn die Spannhilfe muss zumindest um jene Länge von einem freien Ende des zweiten Bügels entfernt sein, welche für das Einführen in die Öffnung gedacht ist, da ja ansonsten die Spannhilfe ein Einführen des freien Endes des zweiten Bügels in die Öffnung verhindern würde. Das Gelenk kann auch im zweiten Bügelabschnitt angeordnet sein, welcher dann einen starr mit dem Haltefuß angeordneten ersten Abschnitt, das Gelenk und einen über das Gelenk gelenkig mit dem ersten Abschnitt angeordneten zweiten Abschnitt aufweist.

Eine Haltevorrichtung mit den Merkmalen des Oberbegriffs des Anspruchs 1 geht aus US 5 349 799 A hervor. Die dort gezeigten bogenförmigen Verlängerungen 9 und 10 dienen lediglich dazu, die greifbare Oberfläche der Haltevorrichtung zu vergrößern.

Aufgabe der Erfindung ist die Bereitstellung einer gattungsgemäßen Haltevorrichtung bei welcher das Kabel oder Rohr einfacher an der Befestigungsvorrichtung befestigt werden kann.

Diese Aufgabe wird durch eine Haltevorrichtung mit den Merkmalen des Anspruchs 1 gelöst. Vorteilhafte Ausführungsformen der Erfindung sind in den abhängigen Ansprüchen definiert.

Erfindungsgemäß ist vorgesehen, dass der über das Gelenk mit dem Haltefuß verbundene zweite Bügel die Öffnung des Bügelverschlusses trägt. Die Öffnung des Bügelverschlusses ist durch Druckausübung auf den zweiten Bügel über das freie Ende des ersten Bügels bewegbar und durch den Bügelverschluss verriegelbar. Die Druckausübung kann im Bereich der Öffnung erfolgen, anstatt wie beim Stand der Technik in einem vom freien Ende des zweiten Bügels beabstandeten Bereich. Damit ist ein Verfehlen des freien Endes des ersten Bügels - der bevorzugt starr am Haltefuß angeordnet und starr ausgebildet ist - nicht möglich. Oberhalb der Öffnung des Bügelverschlusses (auf der vom Montagefuß abgewandten Seite des Bügelverschlusses) ist eine Spannhilfe angeordnet, um einen definierten Angriffspunkt zur Druckausübung auf den zweiten Bügel zur Verfügung zu stellen.
Bevorzugt ist die Spannhilfe als sich in Richtung des zweiten Bügels verjüngender Keil ausgebildet.

Die Öffnung des Bügelverschlusses ist bevorzugt durchgehend ausgebildet, sodass das freie Ende des ersten Bügels beim Verriegeln durch die am zweiten Bügel angeordnete Öffnung des Bügelverschlusses hindurch bewegbar ist, was eine einfache Sichtkontrolle gestattet. Außerdem ist so ein größerer Durchmesserbereich der zu befestigenden Kabel oder Rohre abdeckbar, da die Öffnung des Bügelverschlusses je nach Bedarf mehr oder weniger weit über das freie Ende des ersten Bügels bewegbar ist. Es ist auch möglich, ein aus der Öffnung herausschauendes Ende mittels eines Werkzeugs zu greifen und eine zusätzliche Kraft aufzubringen.

Vorzugsweise ist vorgesehen, dass das Gelenk, über welches der zweite Bügel mit dem Haltefuß verbunden ist, als elastisches oder plastisches Gelenk ausgebildet ist. Die Verschwenkbarkeit des zweiten Bügels ist bei einem solchen Gelenk durch eine lokale Schwächung des Querschnitts des zweiten Bügels im Bereich des Gelenks und die Materialeigenschaft des Bügels selbst gegeben.

Der Bügelverschluss kann z. B. so ausgebildet sein, dass am freien Ende des ersten Bügels eine Rasterung angeordnet ist, die mit einer in der Öffnung des Bügelverschlusses angeordneten Rastnase zusammenwirkt. Alternativ könnte auch zumindest ein Loch am ersten Bügel angeordnet sein, in welches ein in der Öffnung des Bügelverschlusses angeordneter Stift eindrückbar ist. Alternativ könnte auch vorgesehen sein, dass das freie Ende des ersten Bügels ohne Rasterung, Loch oder dgl. ausgebildet ist und in der Öffnung des Bügelverschlusses ein begrenzt bewegbares Element (z. B. keil- oder kugelförmig) angeordnet ist, durch welches nach erfolgtem Einbringen des freien Ende des ersten Bügels in die Öffnung ein selbsthemmendes Feststellen erfolgt.

Vorzugsweise ist die Haltevorrichtung - abgesehen vom ggf. vorhandenen nicht-brennbaren Sicherheitsband und Befestigungsmitteln - einstückig ausgebildet.

Vorzugsweise besteht die Haltevorrichtung - abgesehen vom ggf. vorhandenen nicht-brennbaren Sicherheitsband und Befestigungsmitteln - aus einem elektrisch isolierendem Material.

Vorzugsweise besteht die Haltevorrichtung - abgesehen vom ggf. vorhandenen nicht-brennbaren Sicherheitsband und Befestigungsmitteln - aus einem (vorzugsweise elektrisch isolierenden) Kunststoff.

Bevorzugt ist vorgesehen, dass die Haltevorrichtung eine Vorrichtung zum Anbringen eines zusätzlich zur Befestigungsvorrichtung vorgesehenen, nicht-brennbaren Sicherungsbands für das Kabel oder Rohr an der Haltevorrichtung unabhängig von einer Montage der Haltevorrichtung am Untergrund aufweist. Die Vorrichtung zum Anbringen des nicht-brennbaren Sicherungsbandes an der Haltevorrichtung kann auf vielfältige Art ausgebildet sein, z. B.:
- wenigstens eine an der Haltevorrichtung angeordnete Halteklammer und/oder
- wenigstens ein an der Haltevorrichtung angeordneter Kanal und/oder
- wenigstens eine Klebestelle zwischen der Haltevorrichtung und dem Sicherungsband

Die Befestigung des Sicherungsbandes am Untergrund erfolgt bevorzugt über jenes Befestigungsmittel, über welches die Haltevorrichtung am Untergrund befestigt ist. Alternativ oder zusätzlich könnte natürlich auch ein gesondertes Befestigungsmittel zur Befestigung des Sicherungsbands am Untergrund vorgesehen sein.

Ausführungsbeispiele der Erfindung werden anhand der Figuren diskutiert. Es zeigen:
- Fig. 1: eine isometrische Ansicht eines ersten Ausführungsbeispiels
- Fig. 2: eine weitere isometrische Ansicht zur Fig. 1
- Fig. 3: eine Rückansicht zur Fig. 1
- Fig. 4: eine Ansicht zur Fig. 1 in einer Richtung annähernd normal auf die von der Montageseite abgewandte Seite des Montagefußes
- Fig. 5: eine weitere isometrische Ansicht zur Fig. 1
- Fig. 6: eine weitere isometrische Ansicht zur Fig. 1
- Fig. 7: eine weitere isometrische Ansicht zur Fig. 1 mit eingesetztem Sicherungsband
- Fig. 8: eine weitere isometrische Ansicht zur Fig. 7
- Fig. 9a-e: ein weiteres Ausführungsbeispiel eines nicht-brennbaren Sicherungsbandes
- Fig. 10a-f: einen beispielhaften Montagevorgang
- Fig. 11 a-j: einen weiteren beispielhaften Montagevorgang

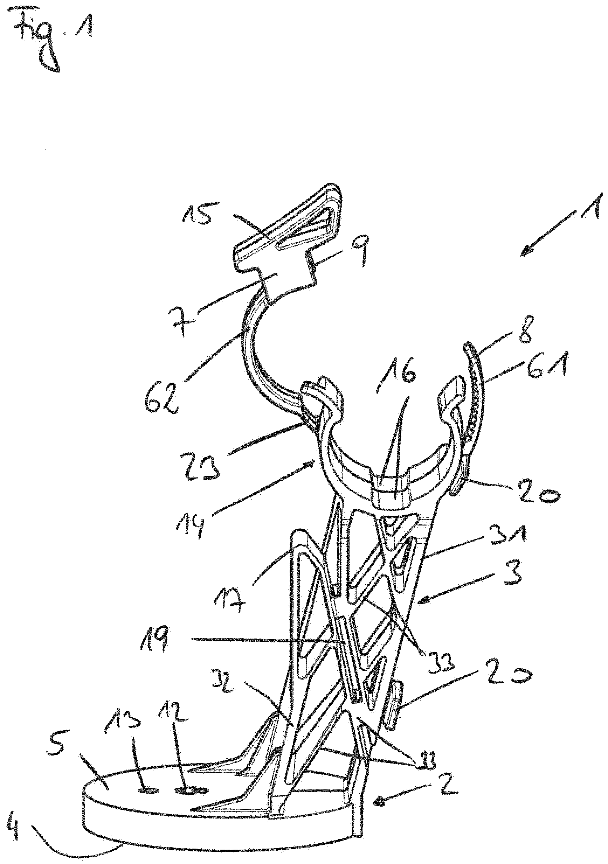

Fig. 1 zeigt ein Ausführungsbeispiel einer erfindungsgemäßen Haltevorrichtung 1 für ein Kabel oder Rohr 28, bevorzugt für ein sogenanntes Strahlkabel (Strahlkabel sind elektrische Leckwellenleiter, die als langgestreckte Antennen verwendet werden).

Die Haltevorrichtung 1 weist einen Haltefuß 2 zur Montage der Haltevorrichtung 1 an einem Untergrund (z. B. Kabeltasse, Decke oder Wand eines Bauwerkes - vorzugsweise eines Tunnels oder Schachts, usw.) auf. Die Montage erfolgt mit der Montageseite 4 des Haltefuß 2, z. B. indem in die erste und/oder zweite Befestigungsöffnung 12, 13 ein Befestigungsmittel eingesetzt und mit dem Untergrund verbunden wird. Beispiele für Befestigungsmittel sind Schrauben, Dübel (insbesondere Metalldübel), Nägel.

Es ist eine Befestigungsvorrichtung zur Befestigung des Kabels oder Rohres 28 am Haltefuß 2 vorgesehen, wobei die Befestigungsvorrichtung an einer von der Montageseite 4 abgewandten Seite 5 des Haltefußes 2 angeordnet ist.

Die Befestigungsvorrichtung 2 weist einen mit dem Haltefuß 2 verbundenen Ständer 3 auf, welcher an einem seitlichen Randbereich des Haltefußes 2 angeordnet ist, sodass die von der Montageseite 4 abgewandte Seite 5 in einer Richtung normal auf die Seite 5 wenigstens teilweise zugänglich ist. Dies erleichtert die Montage der Haltevorrichtung 1 am Untergrund, das gewählte Befestigungsmittel kann ohne weitere Maßnahmen (insbesondere ohne den Einsatz von Adaptern) direkt in die erste und/oder zweite Befestigungsöffnung 12, 13 eingesetzt und mit einem geeigneten Setzwerkzeug (z. B. Hammer, Schrauber, luft- oder pulvergetriebene Werkzeuge) mit dem Untergrund verbunden werden kann. Das Setzwerkzeug hat neben dem Ständer 3 Platz. Der Ständer 3 definiert einen festen Abstand von der Befestigungsvorrichtung für das Kabel oder Rohr 28 zum Montagefuß 2. Natürlich kann der Abstand des Kabels oder Rohres zum Untergrund durch den Einsatz von Abstandhaltern, die zwischen Montagefuß 2 und Untergrund angeordnet werden (vorzugsweise mit der Montageseite 4 des Montagefußes 2 verbunden) vergrößert werden. Zur korrekten Positionierung solcher Abstandhalter kann der Montagefuß 2 wenigstens eine Aufnahme 21 für wenigstens einen am Abstandhalter angeordneten Positionierzapfen aufweisen.

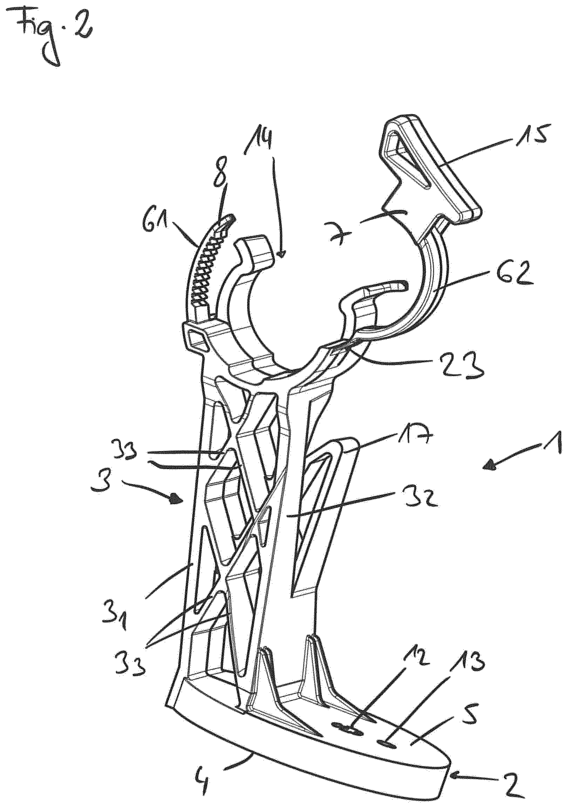

Wie in Fig. 1 oder 2 gut ersichtlich, kann der Ständer 3 nach Art eines Fachwerkes ausgebildet sein. So erreicht man mit geringem Materialeinsatz eine ausreichende Steifigkeit um die Tragkraft der Haltevorrichtung 1 zu gewährleisten. Der Ständer 3 kann aber elastisch genug ausgebildet sein, um sich beispielsweise bei Druckstößen (diese können z. B. durch einen einen Tunnel durchquerenden Zug entstehen) über seine gesamte Länge elastisch verformen zu können und anschließend wieder in die Ausgangslage zurückkehren zu können. So kann der Haltefuß 2 und ein den Haltefuß 2 mit dem Untergrund verbindendes Befestigungsmittel vor dynamischen Kräften weitgehend geschützt werden. Punktuelle Belastungsspitzen der Haltevorrichtung 1 - vor allem im Bereich der Befestigungsvorrichtung für das Kabel oder Rohr 28 und im Bereich der Befestigungsmittel - wie sie aus dem Stand der Technik bekannt sind, können so vermieden werden, da die dynamischen Kräfte zumindest teilweise bereits im Ständer 3 aufgenommen werden. Das Fachwerk bildet ein Feder-Dämpfer-System. Der Ständer 3 weist zwei Längsstreben 31, 32 auf, die den Montagefuß 2 mit der Befestigungsvorrichtung verbinden. Zwischen diesen Längsstreben 31, 32 verlaufen mehrere Querstreben 33.

Ein weiterer Vorteil der Zugänglichkeit der von der Montageseite 4 abgewandte Seite 5 des Haltefußes 2 ist die Möglichkeit einer Kontrolle der sicheren Montage (z. B. Sichtkontrolle, Kontrolle mittels eines Drehmomentschlüssels usw.) und die Möglichkeit einer allfällig erforderlichen Nachbesserung der Montage. Die leichte Zugänglichkeit der Seite 5 des Haltefußes 2 bietet auch Vorteile für eine möglicherweise erforderliche Demontage des Kabels oder Rohres 28 vom Untergrund, ohne die Notwendigkeit das Kabel oder Rohr 28 von der Befestigungsvorrichtung zur Befestigung des Kabels oder Rohres 28 am Haltefuß 2 lösen zu müssen.

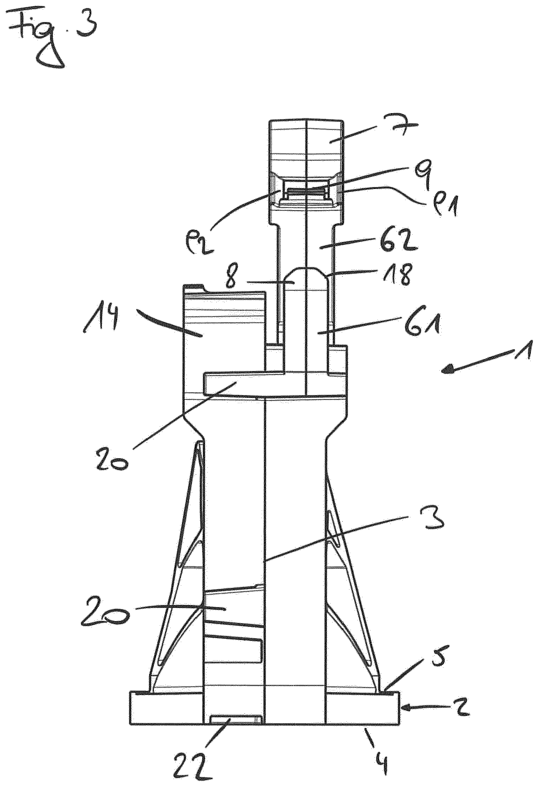

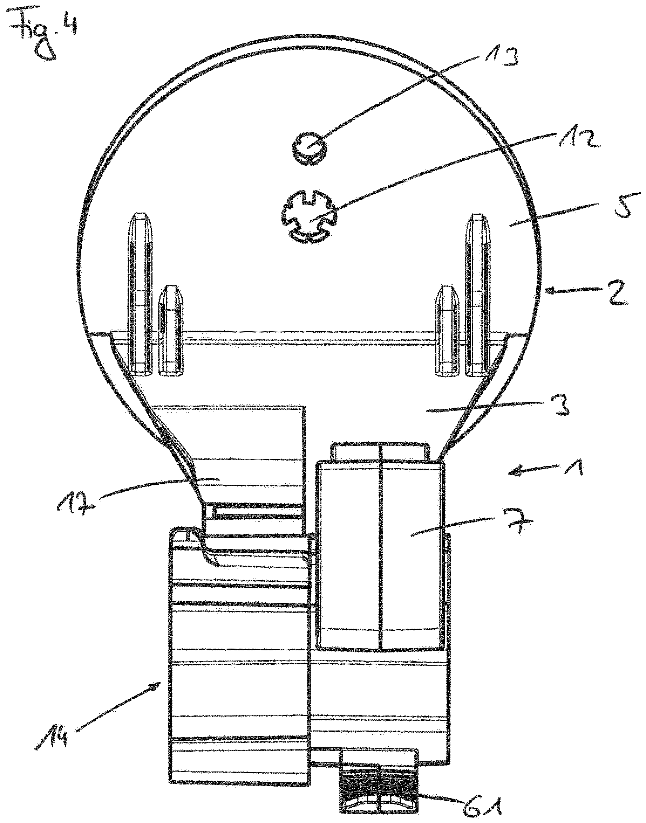

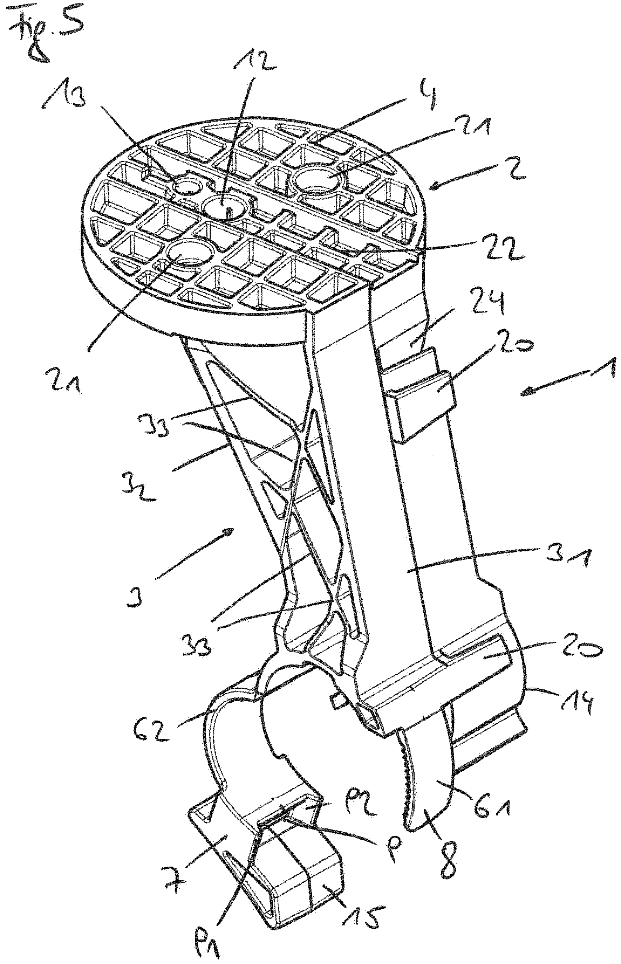

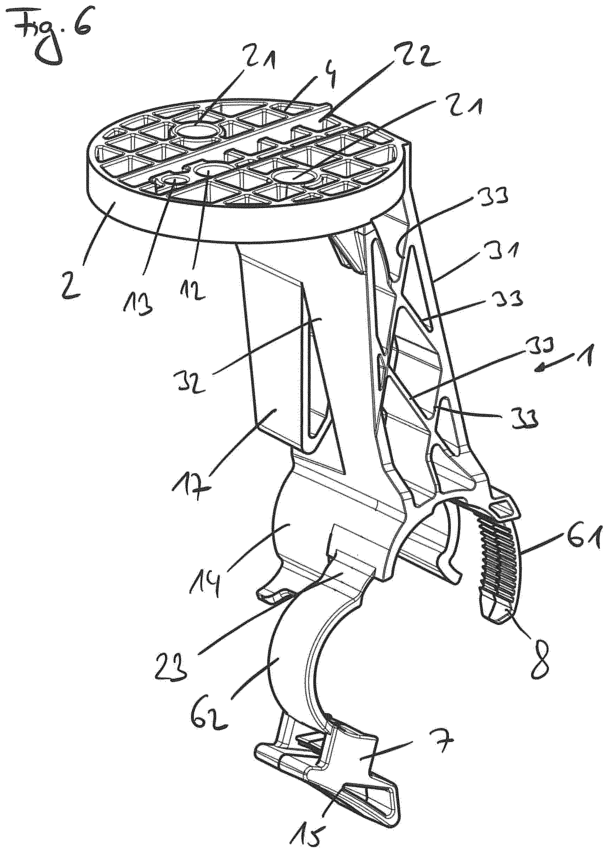

Ist die Haltevorrichtung 1 am Untergrund montiert, kann das Kabel oder Rohr 28 mittels der Vorfixierung 14 an der Haltevorrichtung 1 vorpositioniert werden. Das Kabel oder Rohr 28 wird in die hier mit (hier gabelförmigen) Federklammern ausgebildete Vorfixierung 14 eingeklemmt und kann anschließend axial und/oder radial ausgerichtet werden. Anders als in den Fig. 1 bis 8 dargestellt könnte die Vorfixierung 14 auch andersartig ausgebildet sein, z. B. hakenförmig (dann erfolgt kein Einklemmen, sondern nur ein Einlegen des Kabels oder Rohrs 28).

Ist das Kabel wie gewünscht ausgerichtet, kann die Befestigung des Kabels oder Rohr am Haltefuß 2 mittels der Befestigungsvorrichtung erfolgen.

Dies ist auf besonders einfache Art und Weise möglich, ggf. sogar werkzeuglos. Zu diesem Zweck weist das die als Bügelverschluss ausgebildete Befestigungsvorrichtung einen ersten Bügel 61 und einen über ein Gelenk 23 gelenkig mit dem Haltefuß 2 (über den Ständer 3) verbundenen zweiten Bügel 62 auf. Das freie Ende des zweiten Bügels 62 trägt die Öffnung 9 des Bügelverschlusses 7 und ist durch Druckausübung auf den zweiten Bügel 62 über das freie Ende 8 des ersten Bügels 61 bewegbar und so durch den Bügelverschluss 7 verriegelbar.

Das freie Ende 8 des ersten Bügels 61 ist hier mit einer Verjüngung 18 ausgebildet, um das Einführen in die Öffnung 9 zu erleichtern. Zum selben Zweck weist die Öffnung 9 des Bügelverschlusses 7 zwei Einführschrägen 91, 92 auf.

Die Druckausübung kann z. B. werkzeuglos durch Anlage einer Hand erfolgen. Erfindungsgemäß ist eine Spannhilfe 15 vorgesehen, die einen definierten Angriffspunkt zur Verfügung stellt. Dies kann sowohl von Hand (z. B. mittels eines Daumens) oder über ein Werkzeug (z. B. mit einem definierten Drehmoment) erfolgen.

Natürlich könnte auch mehr als ein Gelenk 23 vorgesehen sein. Das Gelenk 23 könnte in anderer Form, z. B. als Achszapfgelenk, ausgebildet sein.

Vorzugsweise ist vorgesehen, dass das Gelenk 23, über welches der zweite Bügel 62 mit dem Haltefuß 2 verbunden ist, als elastisches oder plastisches Gelenk 23 ausgebildet ist. Die Verschwenkbarkeit des zweiten Bügels 62 ist bei einem solchen Gelenk 23 durch eine lokale Schwächung des Querschnitts des zweiten Bügels 62 im Bereich des Gelenks 23 und die Materialeigenschaft des Bügels 62 selbst gegeben.

Der Bügelverschluss 7 kann z. B. so ausgebildet sein, dass am freien Ende 8 des ersten Bügels 61 eine Rasterung angeordnet ist, die mit einer in der Öffnung 9 des Bügelverschlusses angeordneten Rastnase zusammenwirkt. Alternativ könnte auch zumindest ein Loch am ersten Bügel 61 angeordnet sein, in welches ein in der Öffnung 9 des Bügelverschlusses angeordneter Stift eindrückbar ist. Alternativ könnte auch vorgesehen sein, dass das freie Ende 8 des ersten Bügels 61 ohne Rasterung, Loch oder dgl. ausgebildet ist und in der Öffnung 9 des Bügelverschlusses ein begrenzt bewegbares Element (z. B. keil- oder kugelförmig) angeordnet ist, durch welches nach erfolgtem Einbringen des freien Ende 8 des ersten Bügels 61 in die Öffnung 9 ein selbsthemmendes Feststellen erfolgt.

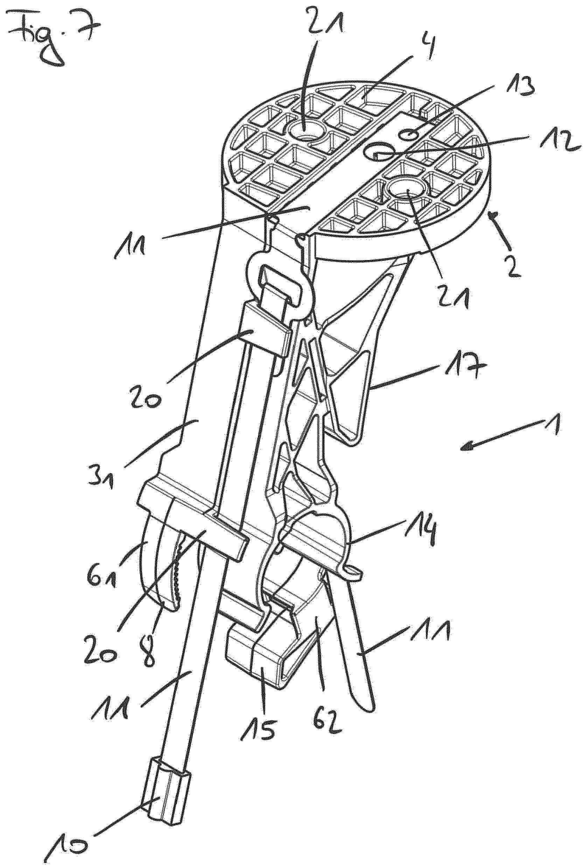

Insbesondere in den Fig. 7 bis 9 ist eine bei diesem Ausführungsbeispiel vorgesehene Vorrichtung zum Anbringen eines nicht-brennbaren Sicherungsbands 11 an der Haltevorrichtung 1 unabhängig von einer Montage der Haltevorrichtung 1 an einem Untergrund erkennbar. Die Vorrichtung zum Anbringen des Sicherungsbandes 11 ist zusätzlich zur Befestigungsvorrichtung für das Kabel oder Rohr 28 vorgesehen. Das nicht-brennbare Sicherungsband 11 bildet im Brandfall eine Absturzsicherung für das Kabel oder Rohr 28, welche ein Abstürzen des Kabels oder Rohres auch bei Zerstörung des Haltefußes 2, des Ständers 3 und der Befestigungsvorrichtung verhindert. Die Vorrichtung zum Anbringen des Sicherungsbandes 11 gestattet einen definierten Verlauf des Sicherungsbandes 11 entlang der Haltevorrichtung 1 und erleichtert so eine -vorzugsweise werkzeuglose - Befestigung des Sicherungsbandes 11 an sich selbst.

Im gezeigten Ausführungsbeispiel umfasst die Vorrichtung zum Anbringen des Sicherungsbandes 11 zwei Halteklammern 20 (ggf. könnte auch nur eine Halteklammer 20 oder mehr als zwei Halteklammern 20 vorgesehen sein) und eine an der Montageseite 4 des Haltefußes 2 angeordnete Ausnehmung 22 (diese ist nicht unbedingt erforderlich). Weiters ist eine vor allem in Fig. 1 erkennbare Führung 19 für das Sicherungsband 11 vorgesehen. Es kann auch eine Einführhilfe 17 für das Sicherungsband 11 vorgesehen sein.

Die Haltevorrichtung 1 ist bevorzugt mit dem Sicherungsband 11 vorkonfektioniert.

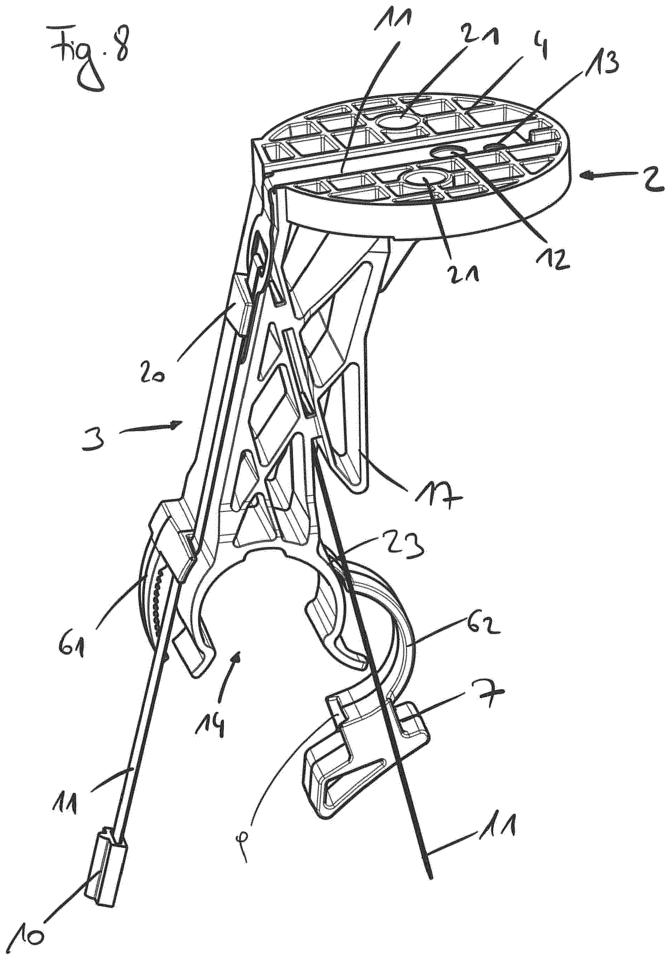

Das Sicherungsband 11 ist in dem in den Figuren 7 und 8 gezeigten Ausführungsbeispiel zweiteilig ausgeführt. Der erste Abschnitt wird im Bereich des Haltefußes 2 angeordnet und ist mit dem zweiten, hier V-förmig ausgebildeten Abschnitt verbunden, der im Bereich des Ständers 3 verläuft. Der erste Abschnitt weist mit den Befestigungsöffnungen 12, 13 des Haltefußes 2 fluchtende Öffnungen auf, damit eine gleichzeitige Befestigung des nicht-brennbaren Sicherungsbandes 11 und des Haltefußes 2 erfolgen kann. Die beiden freien Enden des zweiten Abschnitts (von denen ein Ende mit einem Bandverschluss 10 versehen ist) werden nach dem Anordnen des Kabels oder Rohres 28 miteinander verbunden und würden bei einem Versagen des Bügelverschlusses (z. B. im Brandfall) das Kabel oder Rohr 28 sicher am Untergrund halten.

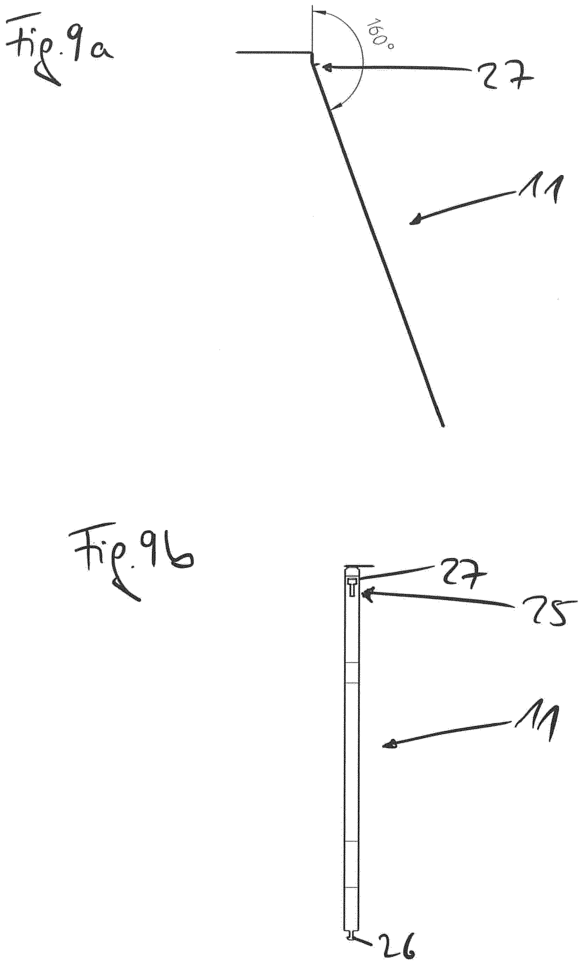

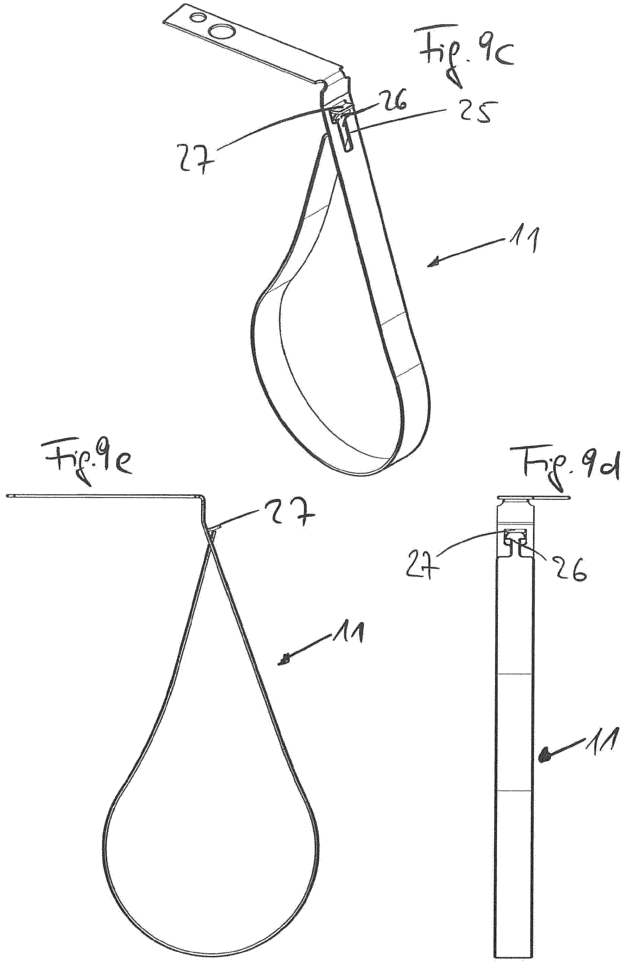

Ein alternatives Ausführungsbeispiel des nicht-brennbaren Sicherungsbandes 11 in einstückiger Form ist in Fig. 9 gezeigt.

Noch vor der Montage der Haltevorrichtung 1 am Untergrund und vor der Vorfixierung des Kabels oder Rohres 28 wird das Sicherungsband 11 in die Ausnehmung 22 und die Halteklammern 20 eingelegt. Das Sicherungsband 11 ist bereits jetzt relativ zur Haltevorrichtung 1 korrekt ausgerichtet und gehalten.

Dann erfolgt die Montage der Haltevorrichtung 1 am Untergrund. Dann erfolgt die Vorfixierung des Kabels oder Rohres 28. Anschließend wird das Sicherungsband 11 um das Kabel oder Rohr 28 herum geführt, durch die Führung 19 hindurch geführt und tritt an der anderen Seite des Ständers 3 über eine Austrittsöffnung 24 aus. Im Bereich der Austrittsöffnung 24 weist das Sicherungsband 11 eine Durchtrittsöffnung 25 auf, sodass das freie Ende des Sicherungsbandes 11 in diesem Bereich mit sich selbst verbunden werden kann. Das Sicherungsband 11 bildet in diesem Zustand eine das Kabel oder Rohr 28 umgebende Schlaufe. Alternativ könnte ein seitliches Einhaken des freien Endes des Sicherungsbandes 11 am Sicherungsband 11 erfolgen. Für die Verbindung weist das freie Ende des Sicherungsbandes 11 in diesem Ausführungsbeispiel eine klauenförmige Ausbildung 26 auf. Die Klauen des freien Endes können das Sicherungsband 11 im Bereich der Durchtrittsöffnung 25 hintergreifen (vgl. Fig. 9b und 9c). Eine andere Ausbildung der Verbindung (z. B. Kleben, Vernieten, usw.) wäre denkbar.

Die Durchtrittsöffnung 25 kann eine Verbreiterung zur Erleichterung des Einführens der Klauen aufweisen, wobei sich an die Verbreiterung ein schlitzförmiger Abschnitt anschließt. Es kann vorgesehen sein, dass die Verbreiterung durch eine umbiegbare Sicherungslasche 27 verschließbar ist, wenn sich die Klaue im schlitzförmigen Abschnitt befindet.

Im gezeigten Ausführungsbeispiel weist das Sicherungsband 11 eine vorgefertigte abgewinkelte Form auf.

Es sind Öffnungen (hier am abgewinkelten Schenkel) vorgesehen, die mit am Haltefuß 2 angeordneten ersten und zweiten Befestigungsöffnungen 12, 13 fluchten, für einen Durchtritt der Befestigungsmittel.

Will man das Sicherungsband 11 von den Befestigungsmitteln galvanisch trennen, können im Bereich der Öffnungen des Sicherungsbandes 11, welche den Durchtritt der Befestigungsmittel gestatten, Hülsen oder Scheiben aus einem isolierenden Material angeordnet sein. Diese können einstückig mit dem Haltefuß 2 ausgebildet sein. Alternativ können die Hülsen oder Scheiben eingelegt werden.

Das nicht-brennbare Sicherungsband 11 kann - wie an sich bekannt - z. B. aus Metall oder Keramik bestehen.

Fig. 9a und 9b zeigen ein Sicherungsband 11, wie es dem Monteur vorgefertigt zur Verfügung gestellt wird. Die Fig. 9c, 9d und 9e zeigen in verschiedenen Ansichten das fertig montierte Sicherungsband 11 bei ausgeblendeter Haltevorrichtung 1.

In den gezeigten Ausführungsbeispielen verläuft das Sicherungsband 11 mit einem durch das Material der Haltevorrichtung 1 gebildeten Abstand zum Kabel oder Rohr 28, was vor allem beim Einsatz eines metallischen Sicherungsbandes 11 und der Ausbildung des Kabels als Strahlkabel vorteilhaft ist, weil so Störungen der Abstrahlung des Strahlkabels durch das metallische Sicherungsband 11 reduziert werden.

Die Befestigungsvorrichtung für das Kabel oder Rohr 28 kann zumindest eine Positioniernut 16 aufweisen, zur lagerichtigen Positionierung des Kabels oder Rohr an der Haltevorrichtung 1, falls das Kabel oder Rohr 28 mit zumindest einer Positionierwulst versehen sind.

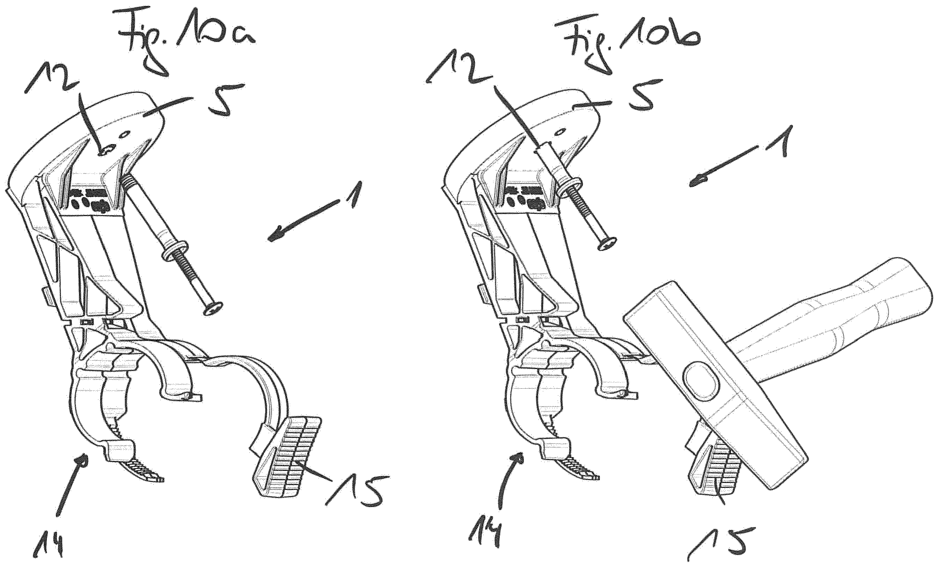

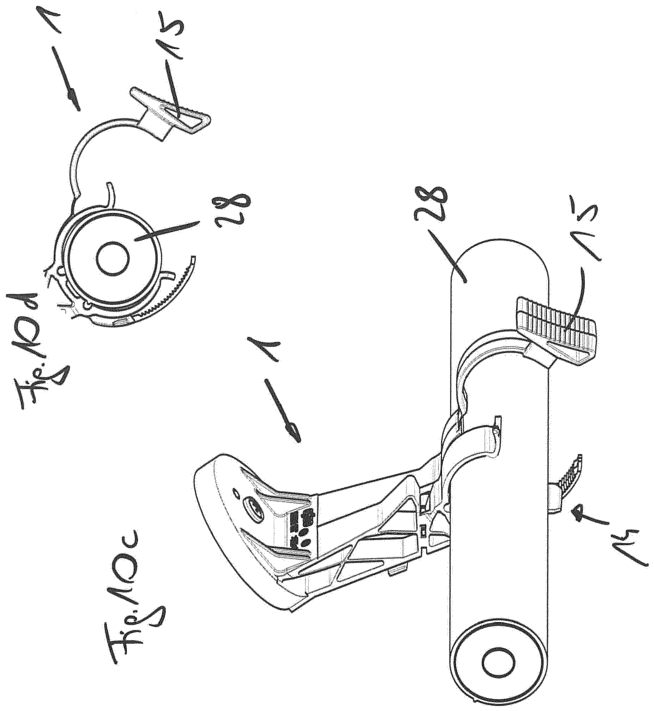

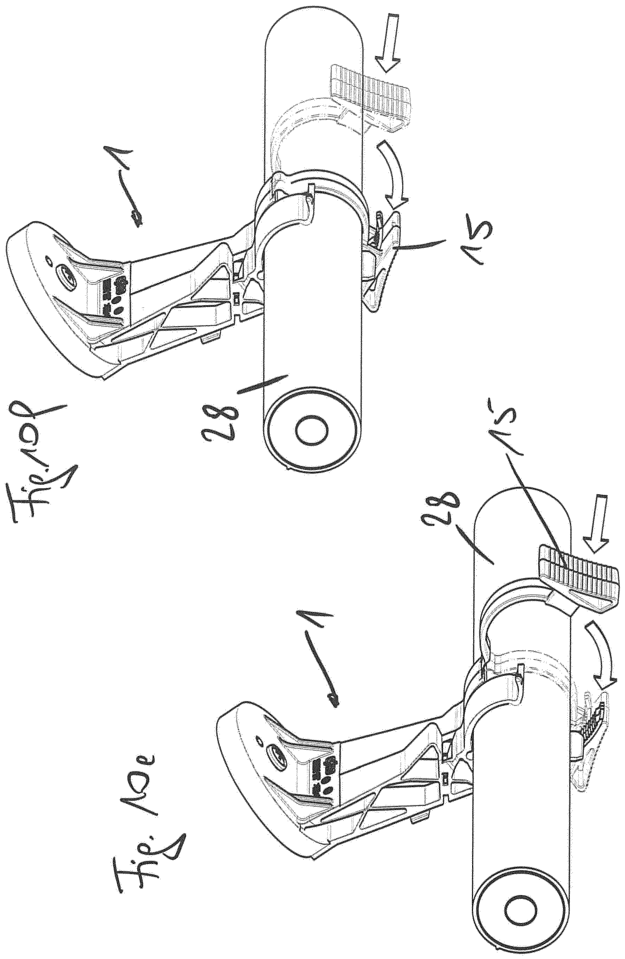

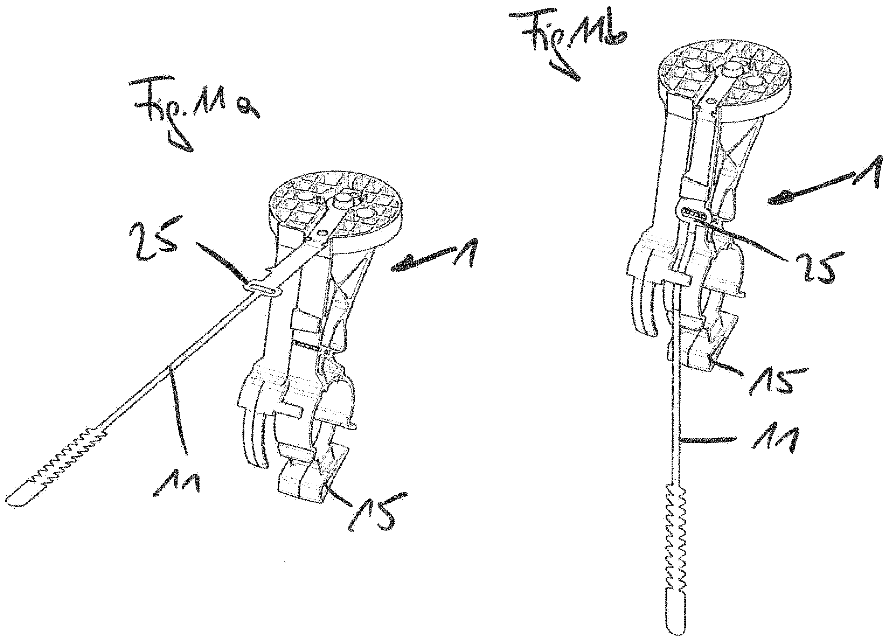

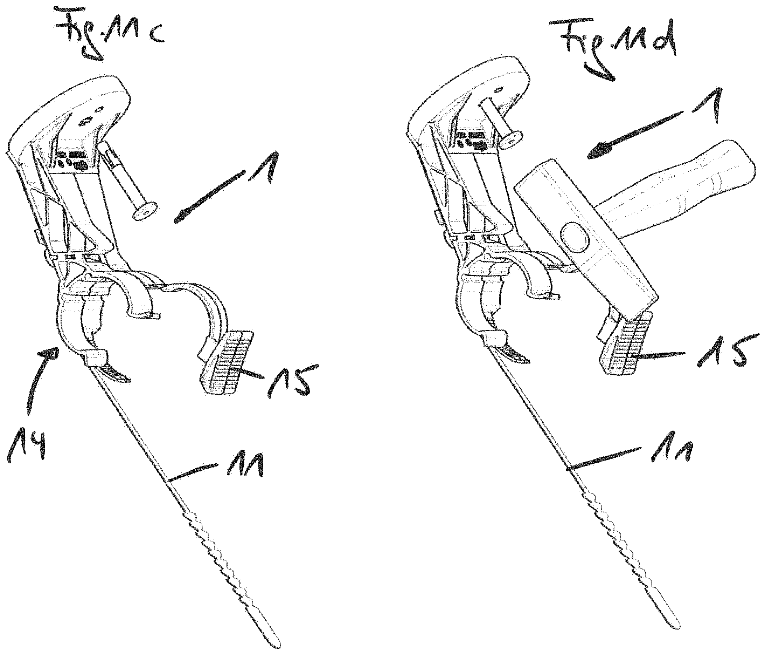

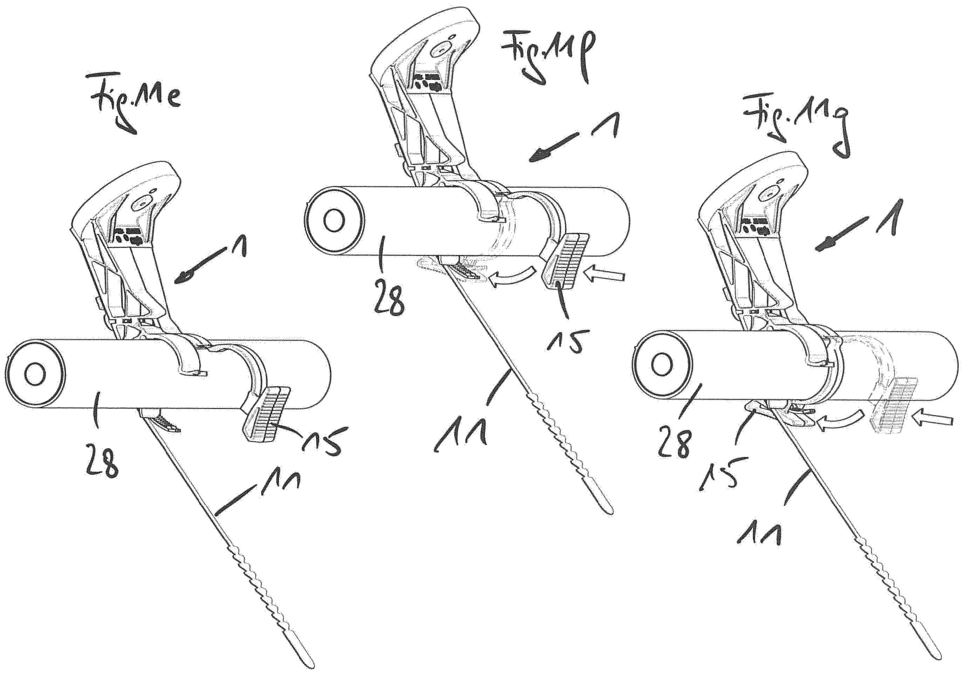

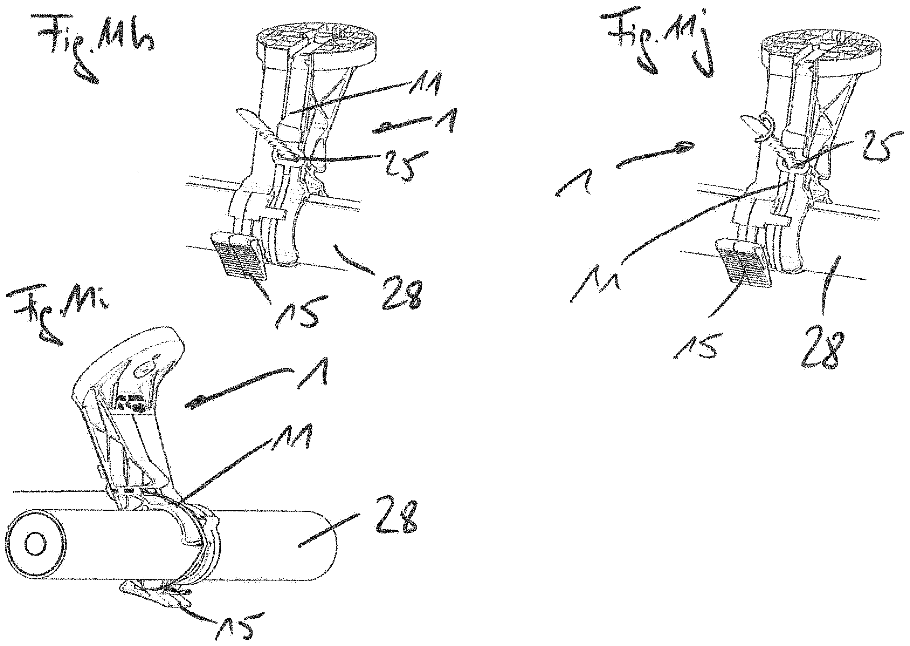

Ein erster beispielhafter Montagevorgang ohne Einsatz eines metallischen Sicherungsbandes 11 ist in den Fig. 10a-f dargestellt. Erkennbar ist, wie das zu befestigende Kabel oder Rohr 28 zunächst von der Vorfixierung 14 gehalten wird, bevor durch Druckausübung auf die Spannhilfe 15 das Schließen des Bügelverschlusses 7 erfolgt.
Ein zweiter beispielhafter Montagevorgang unter Verwendung eines metallischen Sicherungsbandes 11 ist in den Fig. 11a-j dargestellt. Das hier zum Einsatz kommende metallische Sicherungsband 11 weist an seinem freien Ende einen beidseitig verzahnten Abschnitt aus, welcher leicht umgebogen werden kann. Nach dem Einführen des freien Endes in die Durchtrittsöffnung 25 wird das freie Ende umgebogen, um ein Herausrutschen des freien Endes aus der Durchtrittsöffnung 25 zu verhindern. Jene beiden Zähne, welche sich im Bereich der Durchtrittsöffnung 25 befinden, werden so quer zur Durchtrittsöffnung 25 ausgerichtet (vgl. Fig. 11j) und arretieren das freie Ende des metallischen Sicherungsbandes 11 relativ zur Durchtrittsöffnung 25.

Die in den Figuren gemeinsam gezeigten konstruktiven Maßnahmen können auch unabhängig voneinander oder in beliebiger Kombination vorgesehen sein.

### Bezugszeichenliste:

- 1: Haltevorrichtung
- 2: Haltefuß
- 3: Ständer
- 31, 32: Längsstreben des Ständers
- 33: Querstreben des Ständers
- 4: Montageseite
- 5: von der Montageseite abgewandte Seite
- 61: erster Bügel des Bügelverschlusses
- 62: zweiter Bügel des Bügelverschlusses
- 7: Bügelverschluss
- 8: freies Ende des ersten Bügels
- 9: Öffnung des Bügelverschlusses
- 91: Einführschräge der Öffnung des Bügelverschlusses
- 92: Einführschräge der Öffnung des Bügelverschlusses
- 10: Bandverschluss des Sicherungsbandes
- 11: nicht-brennbares Sicherungsband
- 12: erste Befestigungsöffnung
- 13: zweite Befestigungsöffnung
- 14: Vorfixierung
- 15: Spannhilfe
- 16: Positioniernut
- 17: Einführhilfe für Sicherungsband
- 18: Verjüngung des ersten Bügels
- 19: Führung für Sicherungsband
- 20: Halteklammern für Sicherungsband
- 21: Aufnahme für Positionierzapfen
- 22: Ausnehmung für Sicherungsband
- 23: Gelenk
- 24: Austrittsöffnung
- 25: Durchtrittsöffnung am Sicherungsband
- 26: klauenförmige Ausbildung des Befestigungsbands
- 27: Sicherungslasche
- 28: Kabel oder Rohr

## Patentansprüche

1. Haltevorrichtung (1) für ein Kabel oder Rohr (28), mit:
- einem Haltefuß (2) zur Montage der Haltevorrichtung (1) an einem Untergrund
- einer am Haltefuß (2) angeordneten Befestigungsvorrichtung zur Befestigung des Kabels oder Rohr am Haltefuß (2), welche einen ersten Bügel (61) und einen zweiten Bügel (62) aufweist, die durch einen Bügelverschluss (7) miteinander verriegelbar sind, wobei ein freies Ende (8) des ersten oder zweiten Bügels (61, 62) in eine Öffnung (9) des Bügelverschlusses (7) einführbar ist
- einem Gelenk (23), welches den zweiten Bügel (62) mit dem Haltefuß (2) verbindet oder im zweiten Bügel (62) angeordnet ist, wobei
- der zweite Bügel (62) die Öffnung (9) des Bügelverschlusses (7) trägt und die Öffnung (9) des Bügelverschlusses (7) durch Druckausübung auf den zweiten Bügel (62) über das freie Ende (8) des ersten Bügels (61) bewegbar und durch den Bügelverschluss (7) verriegelbar ist,
**dadurch gekennzeichnet, dass**
- oberhalb der Öffnung (9) des Bügelverschlusses (7) eine Spannhilfe (15) angeordnet ist, um einen definierten Angriffspunkt zur Druckausübung auf den zweiten Bügel (62) zur Verfügung zu stellen.

2. Haltevorrichtung (1) nach wenigstens einem der vorangehenden Ansprüche, wobei die Spannhilfe (15) als sich in Richtung des zweiten Bügels (62) verjüngender Keil ausgebildet ist.

3. Haltevorrichtung (1) nach wenigstens einem der vorangehenden Ansprüche, wobei die Öffnung (9) des Bügelverschlusses (7) durchgehend ausgebildet ist.

4. Haltevorrichtung (1) nach wenigstens einem der vorangehenden Ansprüche, wobei das Gelenk (23) als elastisches oder plastisches Gelenk ausgebildet ist.

5. Haltevorrichtung (1) nach wenigstens einem der vorangehenden Ansprüche, wobei ein freies Ende (8) des ersten Bügels (61) mit einer Verjüngung (18) ausgebildet ist.

6. Haltevorrichtung (1) nach wenigstens einem der vorangehenden Ansprüche, wobei die Öffnung (9) des Bügelverschlusses (7) wenigstens zwei Einführschrägen (91, 92) aufweist.

7. Haltevorrichtung (1) nach wenigstens einem der vorangehenden Ansprüche, wobei ein am Haltefuß (2) angeordneter Ständer (3) vorgesehen ist - der vorzugsweise nach Art eines Fachwerkes ausgebildet ist - und welcher die Befestigungsvorrichtung zur Befestigung des Kabels oder Rohres vom Haltefuß (2) beabstandet.

8. Haltevorrichtung (1) nach dem vorangehenden Anspruch, wobei der Ständer (3) an einem seitlichen Randbereich des Haltefußes (2) angeordnet ist, so dass eine von einer Montageseite (4) abgewandte Seite (5) des Haltefußes (2) neben dem Ständer (3) in einer Richtung normal auf die von der Montageseite (4) abgewandte Seite (5) wenigstens teilweise zugänglich ist.

9. Haltevorrichtung (1) nach wenigstens einem der vorangehenden Ansprüche, wobei die Haltevorrichtung (1) eine Vorrichtung zum Anbringen eines zusätzlich zur Befestigungsvorrichtung vorgesehenen, nicht-brennbaren Sicherungsbands (11) für das Kabel oder Rohr (28) an der Haltevorrichtung (1) unabhängig von einer Montage der Haltevorrichtung (1) am Untergrund aufweist.

10. Haltevorrichtung (1) nach dem vorangehenden Anspruch, wobei das Sicherungsband (11) mit sich selbst verbindbar ist, zur Ausbildung einer Schlaufe um ein durch die Befestigungsvorrichtung mit dem Haltefuß (2) verbundenes Kabel oder Rohr (28).

11. Haltevorrichtung (1) nach dem vorangehenden Anspruch, wobei das Sicherungsband (11) eine Durchtrittsöffnung (25) aufweist, in welche ein freies Ende des Sicherungsbandes (11) einführbar ist, wobei bevorzugt vorgesehen ist, dass das freie Ende des Sicherungsbandes (11) eine klauenförmige Ausbildung aufweist und die Klauen des freien Endes das Sicherungsband (11) im Bereich der Durchtrittsöffnung (25) hintergreifen.

12. Haltevorrichtung (1) nach dem vorangehenden Anspruch, wobei die Durchtrittsöffnung (25) eine Verbreiterung zur Erleichterung des Einführens der Klauen aufweist, wobei sich an die Verbreiterung ein schlitzförmiger Abschnitt anschließt, wobei bevorzugt vorgesehen ist, dass die Verbreiterung durch eine umbiegbare Sicherungslasche (27) verschließbar ist.

13. Haltevorrichtung (1) nach wenigstens einem der vier vorangehenden Ansprüche, wobei das Sicherungsband (11) von Befestigungsmitteln, welche die Haltevorrichtung (1) mit einem Untergrund verbinden, galvanisch getrennt ist.

14. Haltevorrichtung (1) nach wenigstens einem der vorangehenden Ansprüche, wobei eine von der Befestigungsvorrichtung verschiedene Vorfixierung (14) für das Kabel oder Rohr (28) vorgesehen ist.
